Europäisches Patentamt

European Patent Office

Office européen des brevets

(19)

(11) Veröffentlichungsnummer: **0 036 592**
A1

(12) **EUROPÄISCHE PATENTANMELDUNG**

(21) Anmeldenummer: 81101908.2

(22) Anmeldetag: 14.03.81

(51) Int. Cl.³: **F 03 G 7/04,** F 01 K 25/08

(30) Priorität: 21.03.80 **IT 2081080**
22.04.80 **IT 2154980**
09.05.80 **IT 2192880**

(43) Veröffentlichungstag der Anmeldung: 30.09.81
**Patentblatt 81/39**

(84) Benannte Vertragsstaaten: **AT BE CH DE FR GB LI LU NL SE**

(71) Anmelder: **Santi, Giunio Guido, Via Fratelli Gabba, 6, I-20100-Milano (IT)**

(72) Erfinder: **Santi, Giunio Guido, Via Fratelli Gabba, 6, I-20100-Milano (IT)**

(74) Vertreter: **Jaumann, Paolo, Studio Consulenza Brevetti Jaumann Piazza Castello, 2, I-20121-Milano (IT)**

(54) **System mit einem geothermischen Kessel und einer mit Kohlensäureanhydriddampf arbeitenden Dampfturbine in geschlossenem Kreislauf.**

(57) Die Erfindung betrifft ein System zur Erzeugung von mechanischer Energie durch Umwandlung von geothermischer Energie mit geringem Enthalpewert, welches im wesentlichen aus einer Turbine (T) und einem Kondensator (C) in einem über ein geothermisches Vorkommen (G) verlaufenden, geschlossenen Kreislauf besteht und dadurch gekennzeichnet ist, daß das Arbeitsmedium Kohlensäureanhydrid ($CO_2$) ist und im Bereich von 50 bis 300 °C liegende Einlaßtemperaturen aufweist, und daß das flüssige Kohlensäureanhydrid in den als geothermischer Kessel fungierenden Untergrund gepumpt ist.

- 1 -

" System mit einem geothermischen Kessel und einer
mit Kohlensäureanhydriddampf arbeitenden Dampfturbine in geschlossenem Kreislauf"

Die vorliegende Erfindung betrifft ein zur Erzeugung von mechanischer Energie geeignetes System,
wobei geothermische Energie mit geringem Enthalpiewert mittels einer mit Kohlensäureanhydriddampf arbeitenden Dampfturbine umgewandelt wird.

Bekanntlich werden derzeit zur Ausnutzung von geothermischen Energiequellen entweder mit Wasserdampf geothermischer Herkunft betriebene Dampfturbinen, oder Ammoniakdampfturbinen verwendet,
wobei das Ammoniak zunächst in einem Kessel verdampft, welcher mit Heisswasser geothermischer
Herkunft gespeist wird.

Im ersten Fall, wo es sich um Wasserdampf unmittelbar geothermischer Herkunft handelt, ist man
wegen Wasserstein und Korrosionserscheinungen da=
zu gezwungen, mit Druck- und Dampffeuchtigkeits=

0036592

werten am Auslass zu arbeiten, die nicht den Op= timalwerten entsprechen; im zweiten Fall muss man kostspielige und platzraubende Wärmeaustau= scher für die Uebertragung der Wärmeenergie vom geothermischen Medium auf das Arbeitsmedium vor= sehen und, aufgrund des geringen Enthalpiewer= tes, mit einem niedrigen Druckwert und daher mit einer Maschine arbeiten, die ein hohes spezifi= sches Volumen im Verhältnis zur Leistungsabgabe aufweist.

In beiden Fällen ergibt sich ein sehr geringer Wirkungsgrad, berechnet als umgekehrtes Verhält= nis der jeweils in 1 kg aus dem Untergrund her= rührendes Medium enthaltenen geothermischen Ener= gie zur erzeugten mechanischen Energie.

Die vorliegende Erfindung geht nun von obigen Ueberlegungen aus und stellt sich die Aufgabe, ein Medium aufzufinden, welches sich im Bereich der geothermischen Temperaturen zwischen 50 und 300°C wie ein überhitzter Dampf verhält, um da= mit ein System zu verwirklichen, das eine maxi= male Ausnutzung der pro kg des geothermischen Mediums zur Verfügung stehenden Energie ermög= licht und dabei ohne die schwerwiegenden und kostspieligen Wärmeaustauscher auskommt, die sonst zur Erhitzung des Arbeitsmediums erfor= derlich sind.

Die vorliegende Erfindung beruht auf der Verwendung von Kohlensäureanhydrid als Arbeitsmedium
für die Dampfturbine, wobei dieses Arbeitsmedium
durch unmittelbaren Kontakt entweder mit dem geothermischen Medium, oder mit dem geothermischen
Vorkommen erhitzt wird.

Allein aus der Verwendung von Kohlensäureanhydrid
als primäres und sekundäres Medium ergeben sich
nachstehende Vorteile:

A) <u>Verwendung als primäres Medium</u>

Die bei 31° liegende Verdampfungstemperatur
bewirkt den druckunabhängigen Uebergang von der
flüssigen zur dampfförmigen Phase und damit erzeugt das Kohlensäureanhydrid einen überhitzten Dampf im Bereich der geothermischen Temperaturen, wo andere Medien lediglich eine Erzeugung von Sattdampf zulassen.

B) <u>Verwendung als Zwischenmedium</u>

Die geringe Wasserlöslichkeit ermöglicht ein
Eindringen des Dampfes unter unmittelbaren Kontakt entweder mit dem geothermischen Medium,
oder mit dem eigentlichen Vorkommen, und ein
unmittelbares Einlassen desselben in die Arbeitsmaschine.

- 4 -

Im folgenden wird ein Beispiel für ein System
mit einer mit Kohlensäureanhydriddampf betriebenen Dampfturbine mit geothermischem Kessel gemäss der vorliegenden Erfindung beschrieben, auf
welches letztere allerdings nicht beschränkt ist.

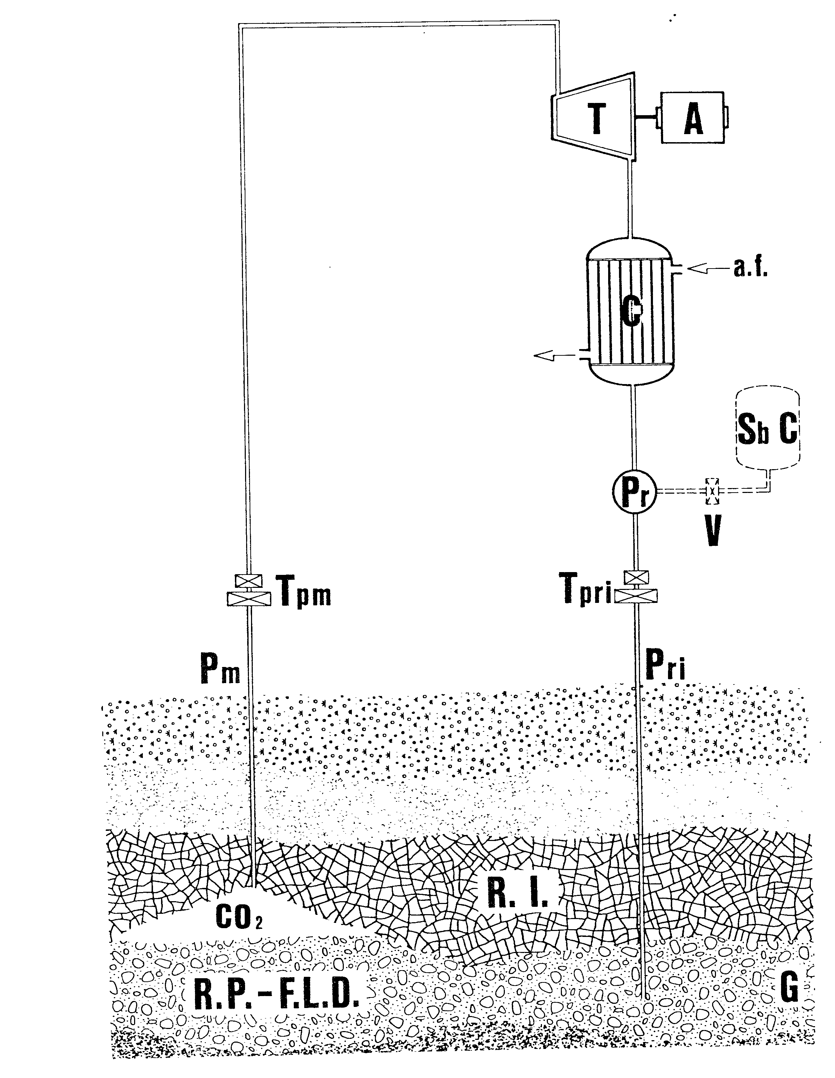

Das System (siehe die beiliegende Figur) besteht
aus einem geothermischen Vorkommen G, welches
schematisch in Form einer heissen durchlässigen
Gesteinschicht RP und einer darüberliegenden undurchlässigen Gesteinschicht RI wiedergegeben ist,
einem mit einer Ueberwachungseinrichtung Tpm versehenen Förderschacht Pm, einer mit einem Stromgenerator A gekuppelten Dampfturbine T, einem
Kondensator C, einer Rückförderpumpe Pr, einem
mit einer Ueberwachungseinrichtung Tpri versehenen Wiederauffüllungsschacht pri und einem $CO_2$-
Beladungsbehälter SbC, der mit einem Absperrventil V versehen ist.

Das Vorkommen G ist in einem Beispiel ein hydrothermales Vorkommen mit vorherrschender Flüssigphase, kann aber auch ebensogut ein Vorkommen
mit vorherrschender Dampfphase, mit heissem Trok=
kengestein, oder unter Felsdruck sein.

Das Kohlensäureanhydrid wird über die Pumpe Pr
im flüssigen Zustand in das Vorkommen G gepumt, wo es bis zum Erreichen des gewünschten Druckes verdampft.

Der Kohlensäure anhydriddampf wird über den För= derschacht Pm entnommen, in der Dampfturbine T entspannt, im Kondensator C niedergeschlagen und über die Pumpe Pr im flüssigen Zustand erneut dem Vorkommen G zugeführt.

Beim Anlauf der Anlage ist es zweckmässig, dass der geschlossene Kreislauf unter einen 35 at über= schreitende Druck gesetzt wird. Der Auslassdruck soll zweckmässigerweise stets 35 at überschrei= ten.

Anstelle des Kohlensäureanhydrid als Arbeitsmedi= um kann mit gleich guten Ergebnissen auch Stick= stoffprotoxyd $(N_2O)$ verwendet werden.

Ebenso kann eine Mischung aus Kohlensäureanhydrid und Stickstoffprotoxyd verwendet werden.

Auch sind Mischungen denkbar, in denen Kohlensäu= reanhydrid und/oder Stickstoffprotoxyd die Haupt= komponenten sind.

## Patentansprüche

1.- System zur Erzeugung von mechanischer Energie durch Umwandlung von geothermischer Energie mit geringem Enthalpiewert, mit Dampfturbine und geschlossenem Kreislauf, dadurch gekennzeichnet, dass das Arbeitsmedium Kohlensäureanhydrid ist und im Bereich von 50° bis 300°C liegende Einlasstemperaturen aufweist, und dass das flüssige Kohlensäureanhydrid in den als geothermischer Kessel fungierenden Untergrund gepumpt ist.

2.- System nach Anspruch 1, dadurch gekennzeichnet, dass das als Arbeitsmedium dienende Kohlensäureanhydrid durch unmittelbaren Kontakt mit dem geothermischen Vorkommen erhitzt ist.

3.- System nach Anspruch 1, dadurch gekennzeichnet, dass das als Arbeitsmedium dienende Kohlensäureanhydrid durch unmittelbaren Kontakt mit einem im Vorkommen vorhandenen, geothermischen Medium erhitzt ist.

4.- System nach Anspruch 1, 2 und 3, dadurch gekennzeichnet, dass der Auslassdruck stets 35 at überschreitet.

5.- System nach Anspruch 1, 2, 3 und 4, dadurch ge= kennzeichnet, dass das flüssige $CO_2$ in einem Kondensator von anderen im Vorkommen vorhande= nen Gasen getrennt wird.

6.- System nach Anspruch 1, 2, 3 und 5, dadurch ge= kennzeichnet, dass der Kreislauf anfänglich un= ter einen 35 at überschreitenden Druck gesetzt ist.

7.- System nach den Ansprüchen 1-6, dadurch gekenn= zeichnet, dass als Arbeitsmedium Stickstoff= protoxyd verwendet wird.

8.- System nach den Ansprüchen 1-6, dadurch gekenn= zeichnet, dass als Arbeitsmedium eine Mischung aus Kohlensäureanhydrid und Stickstoffanhydrid verwendet wird.

9.- System nach den Ansprüchen 1-6, dadurch gekenn= zeichnet, dass als Arbeitsmedium eine Mischung verwendet wird, in der Kohlensäureanhydrid und/ oder Stickstoffprotoxyd die Hauptkomponenten sind.

Fig. 1

T

A

a.f.

C

Sb C

Pr

V

Tpm

Tpri

Pm

Pri

CO₂

R. I.

R.P.-F.L.D.

G

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>US - A - 3 827 243</u> (PAULL) <br> * Zusammenfassung; Spalte 2, Zeilen 1-23, 42-46; Spalte 3, Zeilen 6-23, 35-43 * <br> -- | 1,2 |
| A | <u>DE - A - 2 420 299</u> (KARG) <br> * Seite 1, Abschnitte 1,2 * <br> -- | 1,2 |
| | POWER, Band 123, Nr. 10, Oktober 1979, Seiten 37-43 <br> New York, U.S.A. <br> L.M. PRUCE: "Using geothermal energy for power" <br> * Seite 38, unten, linke Spalte, letzter Zeile, mittel Spalte, Abschnitt 1 * <br> -- | 1,2 |
| A | <u>US - A - 2 927 428</u> (SALA) <br> * Spalte 1, Zeilen 15-33; 62-70 * <br> -- | 5 |
| A | <u>US - A - 3 875 749</u> (BACIU) <br> * Spalte 6, Zeilen 51-68; Spalte 7, Zeilen 1-16; 21-42; 58-68; Spalte 8, Zeilen 1-10; 65-68; Spalte 9, Zeilen 1-19 * <br> -- | 1,3,4 |
| A | <u>DE - A - 2 649 726</u> (ALEFELD) <br> * Seite 3, letzter Abschnitt; Seite 4, Zeilen 1-15 * <br> ---- | 7,8 |

**KLASSIFIKATION DER ANMELDUNG (Int. Cl.)**

F 03 G 7/04
F 01 K 25/08

**RECHERCHIERTE SACHGEBIETE (Int. Cl.)**

F 03 G
F 01 K

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Den Haag | 01-06-1981 | JORIS |

EPA form 1503.1 06.78